# EUROPEAN PATENT APPLICATION

(11) **EP 3 785 970 A1**
(43) Date of publication of application: **03.03.2021**
(21) Application number: 20192670.6
(22) Date of filing: 25.08.2020
(51) Int. Cl.: B60K 17/16

(54) **MOTOR ASSEMBLY WITH INTEGRATED MULTIPLE VELOCITY DIFFERENTIAL**

(30) Priority: 28.08.2019 IT 201900015153
(71) Applicant: Iveco S.p.A., 10156 Torino (IT)
(72) Inventor: PEREIRA LEMOS, Jose Francivaldo, SETE LAGOAS MG (BR)
(74) Representative: Faraldi, Marco

(57) **Abstract**

A differential assembly (1) for a heavy vehicle, comprising a rotating support element (8), a differential (12) and torque selector means (10), the rotating support element (8) being carried, in such a way that it can freely rotate, inside a volume (3) defined by a framework (2) and being connected to an electric motor (50), which is also housed in said framework, the rotating support (8) defining an internal volume (11) configured to house the differential (12) and the torque selector means (10),
the differential (12) being configured to divide a torque to be delivered to a pair of shafts (5, 6) of the vehicle,
the torque selector means (10) connecting the rotating support (8) to the differential (12) according to a plurality of different drive ratios.

## Description

### CROSS-REFERENCE TO RELATED APPLICATIONS

This patent application claims priority from Italian patent application no. 102019000015153 filed on 28/08/2019.

### TECHNICAL FIELD

The invention relates to a motor assembly, in particular to a motor assembly with an integrated differential a heavy vehicle.

### BACKGROUND ART

The differential is a power transmission member available in engine vehicles to distribute the torque coming from an input shaft to a pair of output shafts connected to respective wheels. In particular, as it is known, the differential allows different velocities to be delivered to the wheels, so as to allow each one of them to follow the relative trajectory during paths covering a bend or paths with different grips.

In its most simple configuration, a differential comprises a carrier, which is constrained to two shafts and to two planet gears placed on the shafts and meshes with two driven gears, which are integral to the axle shafts, each connected to the respective wheel.

Known differentials are also provided with a locking function, which is configured to cause the two axle shafts to be integral to one another. This function is useful in case of a surface allowing for a reduced grip of the tyres, in which case one of the two wheels, if it were not constrained to the other one, would tend to skid, thus dispersing the torque.

Therefore, in heavy vehicles, the differentials are bulky elements, which require a torque to be delivered by an external motor. This need is even stronger in electric vehicles, which require a further reduction of dimensions in order to leave room for different elements, such as batteries.

Therefore, existing vehicle differential assemblies need to be improved.

The object of the invention is to fulfil the needs discussed above in an economic fashion.

### SUMMARY OF THE INVENTION

The aforesaid object is reached by a motor assembly with an integrated differential according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 shows a schematic longitudinal section view of an integrated motor-differential assembly according to the invention;
- figure 2 shows an exploded perspective view, with elements removed for greater clarity, of part of the motor-differential assembly of figure 1;
- figure 3 is a perspective view, with elements removed for greater clarity, of a further part of the motor-differential assembly of figure 1;
- figures 4A and 4B show respective schematic longitudinal section views of the motor-differential assembly of figure 1 in two different operating stages; and
- figure 5 shows a partially sectional rear view of a vehicle axle comprises a motor-differential assembly according to the invention.

### DETAILED DESCRIPTION OF THE INVENTION

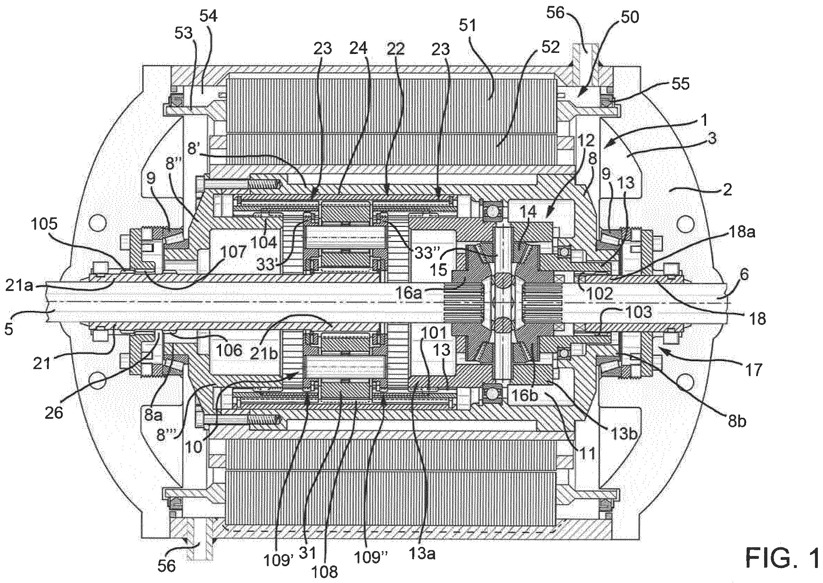

Figures 1 to 3 show a motor-differential assembly 1 for vehicles according to the invention, which is surrounded by a framework 2 defining a closed volume 3, which houses the motor-differential assembly 1. The framework 2 is configured so as to allow a pair of output shafts 5, 6 to go through it, said output shafts being the left and right axle shafts of respective wheels of a vehicle.

The motor-differential assembly 1 comprises a rotating structure 8, which is supported, in such a way that it can freely rotate, by the framework 2 inside the volume 3 by means of known rolling means 9, for example a pair of conical roller bearings.

The rotating structure 8 defines a volume 11, which houses, on the inside, the remaining elements of the motor-differential assembly 1 according to the invention. The volume 11 obviously is open along the axis A so as to allow the axle shafts 5, 6 to go through; as a consequence, the rotating structure 8 defines respective openings 8a, 8b to allow for the passage of the axle shafts 5, 6.

The motor-differential assembly 1 further comprises a differential 12, which can be of any known type, and torque selector means 10, which are configured to mechanically couple the rotating structure 8 to the differential 12 through a plurality of predefined drive ratios. The differential 12 is advantageously arranged close to the opening 8b, whereas the torque selector means 10 are arranged on the opposite side, namely close to the opening 8a inside the volume 11.

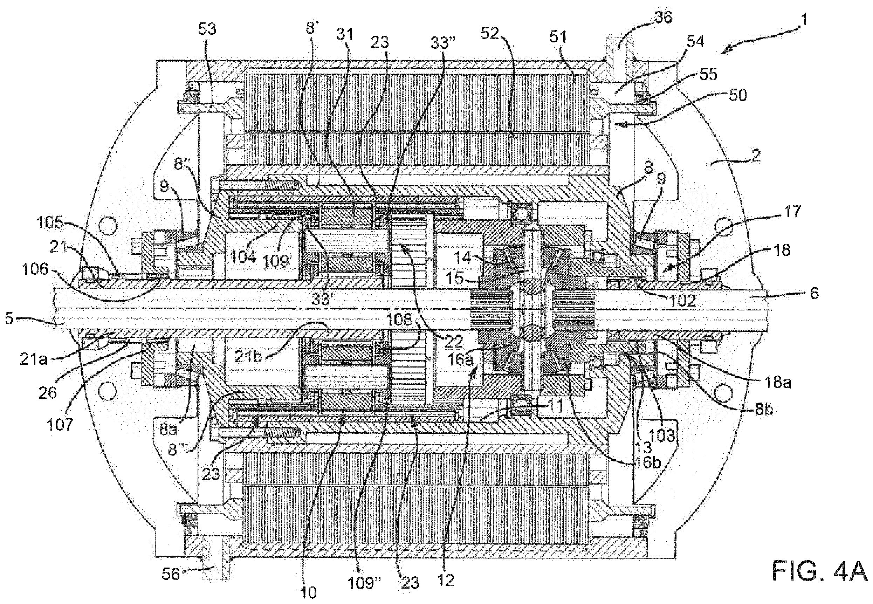

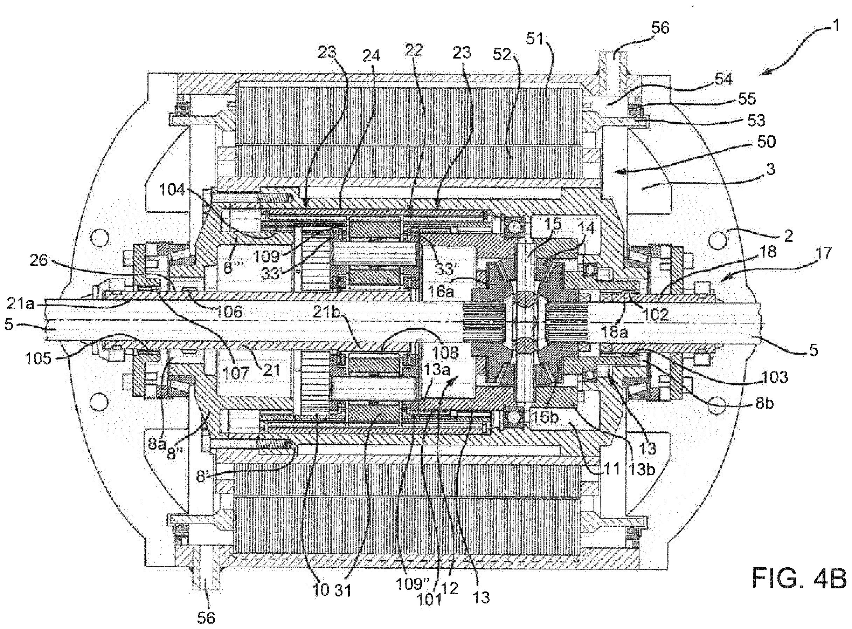

The torque selector means 10 are advantageously configured to allow the rotating structure 8 and the differential 12 to be connected through a neutral coupling, in which the torque (and the velocity) of the rotating structure 8 is transmitted to the differential 12 without changes, and through at least one between a high-velocity coupling (figure 4A), in which the velocity of the rotating structure 8 is transmitted to the differential 12 increased (and decreased in torque), and a low-velocity coupling (figure 4B), in which the velocity of the rotating structure 8 is transmitted to the differential 12 decreased (and increased in torque).

The differential 12 comprises a gear-holder 13, which is carried, so that it can freely rotate, by the rotating structure 8 by means of rolling members 9, for example ball bearings. According to the embodiment described herein, the gear-holder 13 comprises a first portion 13a and a second portion 13b, which are coaxial to one another and are rigidly connected to one another.

In particular, the first portion 13a has a substantially tubular shape and defines a toothing 101, which extends, from an outer surface of its end facing away from the opening 8b, in circumferential manner around the axis A. The second portion 13b has a substantially tubular shape, as well, and has a smaller radial extension than the first portion 13a, so as to be contained inside the latter.

The first portion 13a of the gear-holder 13 carries a plurality of planet gears 14, for example four planet gears, which are angularly equally spaced apart from one another by 90° and are supported by a cross-shaped support 15, which is rigidly carried by the first portion 13a and around whose arms the planet gears 14 can rotate. In particular, the planet gears rotate around axes contained in a plane C, which is perpendicular to the axis A.

The planet gears 14 cooperate with a driven gear, a left bevel gear 16a and a right bevel gear 16b, respectively, which are rigidly carried by the axle shaft 5 and by the axle shaft 6, respectively.

The motor-differential assembly 1 can further comprise blocking means 17, which are configured to lock the differential 12, namely make the gear-holder 13 integral to the framework 2.

In particular, the blocking means 17 comprise a sleeve 18, which is carried in proximity by the second portion 13b of the gear-holder 13 in a linearly movable manner relative to the framework 2. In the embodiment described herein, the sleeve 18 is housed, in a sliding manner, coaxially to the right axle shaft 6 and comprises an end portion 18a, which faces the gear-holder 13 and is provided with a toothing 102, which extends, from its outer surface, in a circumferential manner around the axis A and is configured to cooperate with a respective toothing 103, which circumferentially extends around the axis A from an inner surface of the second portion 13b of the gear-holder 13.

The sleeve 18 is configured to operatively assume a first position, in which the toothing 102 does not cooperate with the toothing 103, and a second condition, in which the toothing 102 cooperates with the toothing 103, thus causing the gear-holder 13 to be integral to the framework 2, hence allowing the velocity coming from the drive shaft 4 to be equally divided between the axle shafts 5, 6, basically cancelling the differential function. The sleeve 18 is operated by means of handling means 19, which are better described below.

It is further clear, according to the accompanying drawings, that the differential 12 can comprise further mechanical elements, such as friction rings, further rolling or thrust-bearing bearings or even couplings, which are not described herein for the sake of brevity, as they are already known to a person skilled in the art.

The rotating structure 8 preferably comprises a first portion 8', which defines the second opening 8b, and a second portion 8", which is rigidly connected to the first portion 8' and defines the first opening 8a.

The two portions 8', 8'' define a substantially cylindrical shape with volume 11, as mentioned above, and, hence, they each comprise a side wall and an axial wall with dimensions that are substantially similar for the two portions 8', 8".

The second portion 8'' of the rotating structure 8 further comprises an engagement portion 8''', which extends, coaxially to the axis A, from the axial wall of the second portion 8'' into the volume 11. In particular, said engagement portion 8'' has an outer diameter having the same value as the outer diameter of the first portion 13a of the gear-holder 13. An end portion of the engagement portion 8'' is provided with a toothing 104 extending, from its outer surface, in a circumferential manner around the axis A.

The torque selector means 10 are configured to mechanically connect the toothing 104 of the rotating structure 8 to the toothing 101 of the gear-holder 13, changing the velocity and, hence, the torque, present in the rotating structure 8 compared to the velocity and, hence, the torque delivered to the gear-holder 13.

According to the embodiment described herein, the torque selector means 10 basically comprise a selector shaft 21, a epicyclic gear 22, which is rigidly carried by the selector shaft 21, a pair of sliding gear assemblies 23 cooperating with the epicyclic gear 22 and a crown 24, which is carried by the rotating structure 8 and cooperates with the epicyclic gear 22 and with the sliding gear assemblies 23.

More in detail, the selector shaft 21 comprises a first end portion 21a close to the opening 8a, which is provided with a pair of toothings 105, 106, which each extend, from its outer surface, in a circumferential manner around the axis A. The toothings 105, 106 are separated by a free space 26 and are configured to selectively cooperate with a corresponding toothing 107 obtained on the framework 2.

The selector shaft 21 is preferably housed so as to be coaxial to and slide on the left axle shaft 5 and is operated so as to reach, by means of handling means 27, a first position (figure 1), in which none of the toothings 105, 106 mesh with the toothing 107, a second position (figure 4A), in which the toothing 106 meshes with the toothing 107, and a third position (figure 4B), in which the toothing 105 meshes with the toothing 107. As a consequence, in the first position the selector shaft 21 is idle, whereas in the second and in the third position the selector shaft 21 is fixed to the framework 2.

The selector shaft 21 further comprises a second end portion 21b, which is provided with a toothing 108, which extends, from its outer surface, in a circumferential manner around the axis A and is configured to cooperate with a plurality of planet gears 31, which are carried by the epicyclic gear 22.

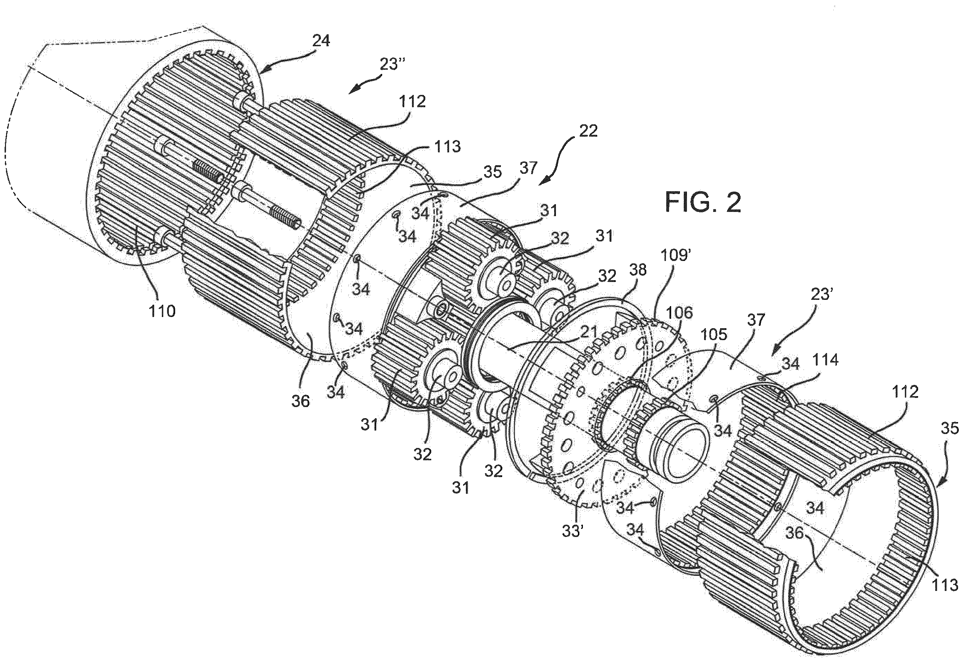

In particular, according to figure 2, there are four planet gears 31, which are arranged in a cross shape and are supported by respective pins 32, which are rigidly carried by a pair of gear-holders 33, more precisely a right gear-holder 33' and a left gear-holder 33''. Each one of said right and left gear-holders 33', 33'' substantially comprises a disc, which serves as support for the pins 32 and is externally provided with a toothing 109', 109'', which is configured to cooperate with the respective sliding gear assembly 23, a right assembly 23' and a left assembly 23", respectively.

The crown 24 basically comprises, always with reference to figure 2, a cylindrical bushing, which is housed inside the volume 11 and is provided with an outer surface cooperating, in a sliding manner, with the inner surface of the rotating structure 8. The bushing is provided with an inner toothing 110, which extends, from its inner surface, in a circumferential manner around the axis A along its entire length and cooperates with a toothing 111, which extends from the outer surface of each one of the planet gears 31 mentioned above. Hence, the crown 24 acts as "ting gear" for the epicyclic gear 22, whereas there is a spline guide coupling for the sliding gear assemblies 23', 23".

For the sake of brevity, one single sliding gear 23 will be described, namely the left sliding gear assembly 23'', since the right one 23' is symmetrical to the left one.

The sliding gear assembly 23'' comprises a cogged ring 35 with a substantially tubular shape, which is provided with a toothing 112, which extends, from its outer surface, in a circumferential manner around the axis A along the entire length of its extension along the latter. The toothing 112 is configured to cooperate with the toothing 110 of the crown 24.

The cogged ring 35 defines, on the inside, a further toothing 113, which extends from the inner surface of an end portion of its and is configured to selectively cooperate with the toothing 104 of the engagement portion 8''' of the rotating structure 8. The cogged ring 35, at the end opposite the one provided with the toothing 113, internally defines an annular seat 36, which is configured to cooperate with a cogged bushing 37.

The cogged bushing 37 is housed in the annular seat 36 and comprises an outer surface, which is configured to cooperate, in a sliding manner, in the annular seat 36, and a toothing 114, which extends, from its inner surface, in a circumferential manner around the axis A along the entire length of its extension along the latter.

The toothing 114 is configured to constantly cooperate with the toothing 109' of the gear-holder 33'' and, selectively, with the toothing 104 of the engagement portion 8''' of the rotating structure 8.

All the toothings 101-114 described above can preferably be toothings with straight teeth.

The cogged bushing 37 further comprises, on the inner surface not provided with the toothing, a plurality of holes 34, which are configured to allow oil to reach the different elements of the differential assembly 1. Similar holes can be provided on the cogged ring 35 and/or on the crown 24.

The selector shaft 21, the epicyclic gear 22, the sliding gear assemblies 23', 23" and the crown 24 are laterally connected to one another by means of a plurality of rings 38, which are configured to limit the side movement of the different elements of the torque selector means 10 relative to one another, so that a movement of the selector shaft 21 along the axis A turns into an identical movement of the epicyclic gear 22, of the sliding gear assemblies 23', 23'' and of the crown 24.

In particular, first rings are provided between the selector shaft 21 and the gear-holders 33', 33", further rings are provided between the latter and the cogged bushing 37 and further rings are provided between the crown 24 and the cogged ring 35. In this way, the lateral movement, in both directions along the axis A, in transmitted by the shaft 21 to the epicyclic gear 22, to the sliding gear assemblies 23', 23'' and to the crown 24.

As already mentioned above, the selector shaft 21 and the blocking means 17 are operated by handling means 19, 27, which are configured to move the selector shaft 21 and the sleeve 18, respectively, on the respective axle shaft 5, 6, as described below with reference to figure 2.

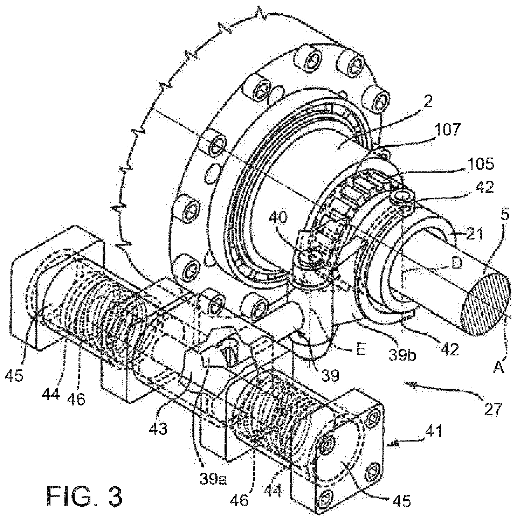

For the sake of brevity, the sole handling means 27 will be described in detail, with reference to figure 3, as the means 19 are similar to them.

The handling means 27 basically comprise a support arm 39 comprising a first end 39a, which is connected to an actuator 41, and a second end 39b, which is provided with a pair of arms 42, an upper arm and a lower arm, respectively, which are connected to the selector shaft 21 on the opposite side of the toothing 105 relative to the toothing 106. The two arms 42 are advantageously connected to the selector shaft 21 by means of respective hinges, which are coaxial to one another and to an axis D, which is perpendicular to the axis A.

The support arm 39 is hinged relative to the framework 2 by means of a hinge 40, which is arranged in an intermediate position between the first and the second end 39a, 39b of the arm and is configured to allow it to rotate around an axis E, which is parallel to the axis D.

The end 30a is connected to the actuator 41, which is configured to cause it to make a linear movement, which is transmitted, in a reversed manner due to the hinge 40, to the selector shaft 21 so as to allow, or not to allow, one of the teeth 105, 106 to mesh with the teeth 107.

The actuator 41 advantageously is a pneumatic actuator and comprises a rod 43, which is provided, at both ends, with respective pistons 44, which are designed to slide in cylinders 45, which are coaxial to one another and are connected to a pneumatic system of the vehicle. The filling of one of the cylinders 45 - and the consequent discharge of the opposite one - with gas under pressure allows the rod 43 to move along the axis of the cylinders 45. This movement of the rod 43 is transmitted to the support arm 39 and, as already mentioned above, to the shaft 21. The gas under pressure injected into the cylinders 45 advantageously is a gas of a pneumatic system of the vehicle or, alternatively, a gas stored in a dedicated tank under pressure.

Between the pistons 44 and a case defining the cylinders 45 there preferably are elastic means 46, which are configured to remain in a rest position, in which the selector shaft 21 does not mesh with any one of the toothings 105, 106.

The handling means 17 can be similar, simply provided with one single cylinder 45, as they have to move the sleeve 18 to one single position relative to the gear-holder 13.

According to the invention, the motor-differential assembly 1 further comprises an electric motor 50, which is housed inside the volume 3 and is configured to deliver a torque/rotation to the rotating structure 8. In particular, the electric motor 50 is housed around the rotating structure 8 and preferably is coaxial to the latter.

The electric motor 50 preferably comprises a stator 51, which is carried by the framework 2, and a rotor 52, which is carried by the rotating structure 8. More in detail, according to the embodiment described herein, the rotor 52 is rigidly carried by the rotating structure 8 interposed between the portions 8', 8'' and connected to them, for example by means of threaded means.

The electric motor 50 can be of any known type comprising a rotor and stator and is electrically connected to a power source of the vehicle in a known manner, which is not described and shown herein for the mere sake of brevity.

More in detail, the stator 51 can be carried by a cylindrical element 53, which is rigidly carried by the framework 2 inside the volume 3 and defines, relative to the framework 2, an annular volume 54, which at least partially houses the stator 51.

The motor-differential assembly 1 advantageously comprises conditioning means for the electric motor 50, which are configured to keep the latter within a pre-set temperature range.

According to the embodiment described herein, the annular volume 54 is sealed relative to the remaining part of the volume 3, for example by means of rotating gaskets 55, and the volume 54 is fluidically connected, by means of a pair of pipes 56, to a hydraulic conditioning circuit, which is configured to introduce a conditioning fluid into the volume 54, said conditioning fluid being configured to exchange heat with the stator part 512 housed inside the volume 54.

The motor-differential assembly 1 according to the invention works as follows.

In a first operating condition, which is shown in figure 1, the selector shaft 21 is arranged in such a way that the toothing 107 of the framework 2 is placed in the space 26 between the toothings 105 and 106 and, hence, the selector shaft 21 can rotate in an idle manner. As a consequence, the toothing 104 meshes both with the toothing 113 of the cogged ring 35 and with the toothing 114 of the cogged bushing 37.

In this configuration, the motor 50 is controlled so as to cause the rotation of the rotor 52 with a predefined velocity/torque, which is then transmitted to the rotating structure 8 and, through the toothings 104, 113, 114, is passed on to the left sliding gear assembly 23", which transmits the torque to the crown 24 thanks to the continuous meshing between the toothing 112 and the toothing 110 of the latter. From the crown 24, the torque goes back, in an identically reverse manner, from the latter to the gear-holder 13, going through the same toothings of the right sliding gear assembly 23', From the gear-holder 13, the torque is transmitted to the planet gears 14 and, hence, to the pinions 16a and 16b and, by so doing, to the axle shafts 5, 6.

Since the shaft 21, in this configuration, is idle, the torque transmitted from the crown 24 to the plant gear 31, considering the coupling between the toothings 110 and 111, causes the shaft 21 and the gear-holders 33', 33" to rotate with the same velocity as the crown 24. In this way, the velocity delivered to the gear-holder 13 is the same as the one delivered to the rotating structure 8.

In a second operating condition, which is shown in figure 4A, the selector shaft 21 is arranged in such a way that the toothing 107 of the framework 2 meshes with the toothing 106 and, hence, the selector shaft 21 is fixed relative to the framework 2.

As a consequence, the toothing 104 meshes with the sole toothing 114 of the cogged bushing 37 of the left sliding gear assembly 32", whereas the toothing 113 of the cogged ring 35 of the right sliding gear assembly 32' meshes with the sole gear-holder 13. Like in the preceding case, the gear-holders 33', 33'' always cooperate with the cogged bushing 37 thanks to the meshing of the toothings 109', 109'' with the toothing 114.

Therefore, in this configuration, the torque is transmitted from the rotor 52 to the rotating structure 8 and, through the toothings 104 and 114, is passed on to the cogged bushing 37, which, by so doing, rotates relative to the cogged ring 35.

From the cogged bushing 37, through the toothings 114 and 109'', the torque is transmitted to the gear-holder 33'' and, hence, through the pins 32, to the planet gears 31; from them, thanks to the toothings 111 and 110, the torque is passed on to the crown 24.

From the crown 24, the torque is transmitted, thanks to the toothings 110 and 112, to the cogged ring 35 of the sliding gear assembly 32' and, from the latter, thanks to the toothings 113 and 101, it gets to the gear-holder 13.

Since the shaft 21, in this configuration, as already mentioned above, is fixed, the epicyclic gear 21 acts increasing the velocity outputted by the planet gears 31 (and, hence, decreasing the torque value).

In this way, the velocity delivered to the gear-holder 13 is greater than the one delivered to the rotating structure 8.

In a third operating condition, which is shown in figure 4B, the selector shaft 21 is arranged in such a way that the toothing 107 of the framework 2 meshes with the toothing 105 and, hence, the selector shaft 21 is fixed relative to the framework 2.

As a consequence, in a mirror-like manner relative to the second operating condition described above, the toothing 104 meshes with the sole toothing 113 of the cogged ring 35 of the left sliding gear assembly 32'', whereas the toothing 114 of the cogged bushing 37 of the right sliding gear assembly 32' meshes with the sole gear-holder 13. Like in the preceding case, the gear-holders 33', 33'' always cooperate with the cogged bushing 37 thanks to the meshing of the toothings 109', 109'' with the toothing 114.

Therefore, in this configuration, the torque is transmitted from the rotor 52 to the rotating structure 8 and, through the toothings 104 and 113, is passed on to the cogged ring 35, which, by so doing, rotates relative to the cogged bushing 37 and drags the crown 24.

Thanks to the toothings 110 and 11, the torque is transmitted from the crown 31 and from them, through the pins 32, to the gear-holder 33'. From the latter, the torque is transmitted, through the toothings 109' and 114, to the cogged bushing 37 of the sliding gear assembly 32' and, from the there, since the toothing 114 meshes with the toothing 101, to the gear-holder 13.

Since the shaft 21, in this configuration, as already mentioned above, is fixed, the epicyclic gear 21 acts decreasing the velocity delivered to the planet gears 31 (and, hence, increasing the torque value).

In this way, the velocity delivered to the gear-holder 13 is smaller than the one delivered to the rotating structure 8.

The activation of a specific configuration can be carried out based on the needs of the user through a relative control on the dashboard of the vehicle or automatically thanks to the recognition of a predetermined torque-velocity condition.

Once the configuration to be set has been chosen, the selector shaft 21 is moved through the support arm 39, which is controlled by the pneumatic actuator 41.

In particular, according to the embodiment described herein, in the first operating condition, the cylinders 45 are not under pressure, so that the springs 46 keep the rod 43 in a neutral position in order to allow the selector shaft 21 to be arranged in such a way that none of the toothings 105, 106 mesh with the toothing 107.

In order to change the position of the selector shaft 21 either to the second or to the third operating condition, it is necessary to feed gas under pressure into one of the two cylinders, which moves the relative piston 44 and, hence, the rod 43, which allows the support arm 39 to cause the rotation, around the hinge 40, of the arms 42 connected to shaft 21, which consequently moves along the axis A.

If needed, the user can activate the blocking means 17, namely move the sleeve 18 so that the toothings 102 and 103 mesh with one another, thus making the gear-holder 13 integral to the pinions 16a, 16b and, hence, causing the velocities outputted by the axle shafts 5, 6 to be equal. The activation of the sleeve 18 is similar to the one of the handling means 27 and, therefore, it is not described for the sake of brevity.

During the aforesaid operation, the fluid flowing through the pipes 56 in the volume 54 keeps the motor 50 at a pre-set temperature, or within a pre-set temperature range, and is adjusted by controlling the circuit handling the fluid flowing into the pipes 56, in a known manner.

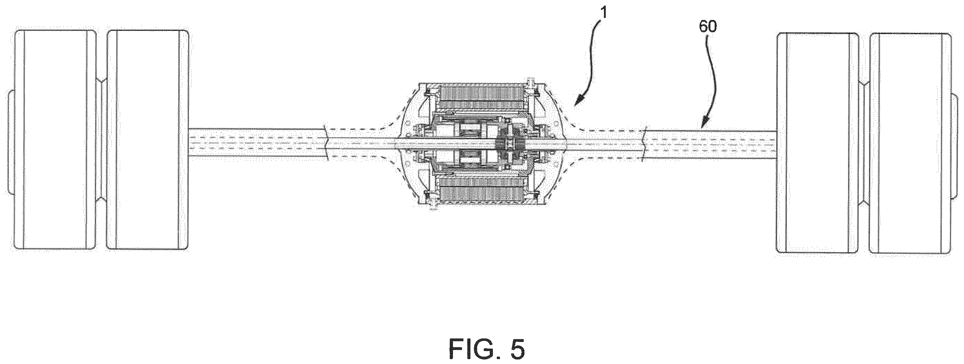

According to the invention, with reference to figure 5, the motor-differential assembly 1 can be integrated in an axle 60 of the a vehicle (not shown). As a consequence, the axle 60 comprising said motor-differential assembly 1 is an autonomous drive axle 60.

Owing to the above, the advantages of a motor-differential assembly 1 according to the invention are evident.

The fact that an electric motor 50 and a differential system 12 are integrated inside a same framework 2 leads to a compact motor-differential assembly 1, which can be used in a wide torque/velocity range and, hence, is versatile and capable of being used in vehicles of different types and with different weights.

Furthermore, the motor-differential assembly 1 is extremely compact and isolated from the outside. In this way, useful space can be obtained in the vehicle in order to house other useful elements, such as power batteries.

Moreover, since it is integrated in an axle 60, drive axles can be obtained which are versatile, as already mentioned above, and easily replaceable for vehicle maintenance reasons.

The motor-differential assembly 1, thanks to the torque selector means 10, allows the drive ratios to be multiplied compared to the ones provided by the transmission, so as to define, like in the case described herein, three further drive ratios, which multiply the ones already existing thanks to the transmission of the vehicle.

In this way, it is possible to provide a versatile differential for different types of driving styles and loads of the vehicle.

The arrangement of the torque selector means 10 and of the differential 12 inside a rotating structure 8 connected to the drive shaft 3 leads to a reduction of the space taken up and allows all the gears of the torque selector means 10 and of the differential 12 to remain closed within a relatively protected and lubricated space.

The construction of the elements of the torque selector means 10, which comprise a selector shaft 21, which is the sun gear of a epicyclic gear 22 connected to a sun gear 24 with gears 23 provided with toothings, which can selectively mesh with the rotating structure 8 or the differential 12, allows the drive ratios to be obtained in an extremely compact manner, which can easily be assembled and manufactured.

The movement of the selector shaft 21, which is caused by the pneumatic-mechanical system described above, which comprises the actuator 41 and the hinged support arm 29, is precise and can be handled by a simplified logic, which can be automated. Furthermore, the pressure with which to operate the support arm 29 is low, thanks to the lever mechanism of the hinge 40.

Moreover, the presence of a conditioning system for the electric motor 50 allows the latter to be kept within a pre-set temperature range, so that it can always work at the top of its efficiency.

Finally, the motor-differential assembly 1 according to the invention can be subjected to changes and variants, which, though, do not go beyond the scope of protection set forth in the appended claims.

In particular, the arrangement of the elements of the torque selector means 10 and of the differential 12 inside the volume 11 could be different.

The differential 12 could comprise different elements, as already mentioned above, and the gears described above could be of different types, for example helical gears.

The handling means 19, 27 could obviously be provided with different actuator means, for example hydraulic or electric actuator means.

The electric motor 50, as mentioned above, can be of any type and the conditioning system can be obtained in a different manner or be of a different type, for example an electric conditioning system, by means of thermal-electric devices, for example Peltier cells.

Similarly, the arrangement and the coupling of the stator 51 and of the rotor 52 to the framework 2 and to the structure 8, respectively, can be obtained in different manners and in different positions.

## Claims

1. A motor-differential assembly (1) for a heavy vehicle, said motor-differential assembly (1) comprising a framework (2) defining an internal volume (3) and a rotating support element (8), a differential (12) and torque selector means (10) housed in said volume (3),
said rotating support element (8) being carried in a rotationally free manner by said framework (2) and defining an internal volume (11) configured to house said differential (12) and said torque selector means (10),
said differential (12) being configured to divide a torque entering a pair of shafts (5, 6) of said vehicle,
said torque selector means (10) connecting said rotating support (8) to said differential (12) according to a plurality of different drive ratios,
said motor-differential assembly (1) comprising an electric motor (50) housed in said volume (3) and configured to provide a torque/velocity to said rotating support element (8) and conditioning means at least partially housed in said volume (3) and configured to keep said electric motor (50) within a pre-set temperature range, said conditioning means comprising fluid conditioning means.

2. The motor-differential assembly according to claim 1, wherein said electric motor (50) comprises a stator (51) carried by said framework (2) and a rotor (52) carried by said rotating support (8).

3. The motor-differential assembly according to claim 1 or 2, wherein said electric motor (50) is housed coaxially about said rotating support (8).

4. The motor-differential assembly according to one of the preceding claims, wherein said plurality of different drive ratios comprises a neutral drive ratio in which the torque/velocity from the rotating element (8) is transmitted unaltered to the differential (12) and at least a drive ratio in which the torque/velocity from the rotating support element (8) is transmitted with a higher or lower value to the differential (12).

5. The motor-differential assembly according to one of the preceding claims, wherein said rotating support (8) comprises a first portion (8') defining a first opening (8b) configured to enable the passage of one of said shafts (5, 6) and a second portion (8"), fixed in a reversible manner to said first portion (8') and defining a second opening (8a) configured to enable the passage of the other of said shafts (5, 6), one between said first and second portions (8', 8'') being connected to said electric motor (50) .

6. The motor-differential assembly according to one of the preceding claims, wherein said torque selector means (10) comprise a selector shaft (21), a crown (24), a first gear (22) and a pair of second gears (23', 23''),
said selector shaft (21) being connected to said first gear (22),
said first gear being connected to said crown (24), to said pair of second gears (23', 23'') and furthermore to said crown (24)
one of said second gears (23') connecting said first gear (22) to said differential (12) and the other of said second gears (23'') connecting said first gear (22) to said rotating support (8),
said first gear (22) and said pair of second gears (23, 23') altering the torque/velocity between said rotating support (8) and said differential (12) according to the position of said selector shaft (21) with respect to said framework (2).

7. The motor-differential assembly according to claim 6, wherein, when said selector shaft (21) is configured
to assume a first position in which it is idle and said torque/velocity from said rotating shaft (8) is transmitted unaltered to said differential (12), and
to assume at least a second position in which it is fixed to said framework (2) and said torque/velocity from said rotating shaft (8) is transmitted with a higher or lower value to said differential (12).

8. The motor-differential assembly according to claim 6 or 7, wherein said first gear (22) is an epicyclic gear the sun gear of which is said selector shaft (21) and comprising a plurality of planetary gears (31) meshing between said selector shaft (21) and said crown (24), said epicyclic gear comprising a pair of gear-holders (33', 33'') carried by said planetary gears (31), each respectively meshing on one of said second gears (23', 23'').

9. The motor-differential assembly according to one of the claims from 6 to 8, wherein said pair of second gears (23', 23'') comprises a cogged ring (35) constantly externally meshed with said crown (24) and selectively internally meshable with said rotating support (8) and a cogged bushing (37) carried internally in a sliding manner by said cogged ring (35) constantly internally meshed with said first gear (22) and selectively meshable with said differential (12) or said rotating support (8).

10. The motor-differential assembly according to one of the claims from 1 to 5, wherein said torque selector means (10) comprise a plurality of side containment means (38) interposed between said selector shaft (21) and said first gear (22),
between said first gear and said pair of second gears (23', 23'') and
between said pair of second gears (23', 23'') and said crown (24),
said plurality of side containment means (38) keeping said torque selector means (10) stacked, so that the movement of said selector shaft (21) corresponds to an equal movement of all the other elements.

11. The motor-differential assembly according to one of the preceding claims, comprising blocking means (17) configured to block the operation of said differential (12) .

12. The motor-differential assembly according to one of the claims from 6 to 11, comprising handling means (27) configured to move said selector shaft (21), said handling means (27) comprising a support arm (39) connected to said selector shaft (21) and an actuator (41) configured to move said support arm (39).

13. The motor-differential assembly according to claim 11, wherein said support arm (39) comprises a first end (39a) connected to said actuator (41), a second end (39b) hinged to said selector shaft (21) and being hinged in an intermediate position between said ends (39a, 39b) to said framework (2).
